# EUROPEAN PATENT APPLICATION

(11) **EP 2 397 501 A1**
(43) Date of publication of application: **21.12.2011**
(21) Application number: 11166990.9
(22) Date of filing: 20.05.2011
(51) Int. Cl.: C08B 1/00, C08B 1/02, C08B 3/06, D21C 3/04, D21H 11/00

(54) **Method for producing cellulose diacetate from bamboo fibers**

(30) Priority: 17.06.2010 CN 201010203966
(71) Applicant: Yang, Zhanping, Nantong Jiangsu 226008 (CN); Ma, Xialong, Nantong Jiangsu 226008 (CN); Li, Xiaodong, Nantong Jiangsu 226008 (CN)
(72) Inventor: Yang, Zhanping, 226008 Nantong Jiangsu (CN); Ma, Xiaolong, 226008 Nantong Jiangsu (CN); Li, Xiaodong, 226008 Nantong Jiangsu (CN); Cao, Jianhua, 226008 Nantong Jiangsu (CN); Gao, Chunhong, 226008 Nantong Jiangsu (CN)
(74) Representative: Hryszkiewicz, Danuta

(57) **Abstract**

A method for producing cellulose diacetate with bamboo fibers as a raw material having the steps of soaking, treating with ultrasonic sound, de-acidifying, acetylating, hydrolyzing, precipitating, screening, extruding, washing, rolling, and drying. The method reduces the material loss and pollution, completely swells and dissolves the bamboo fibers, accelerates the fibrillation, reduces the crystallinity, improves the accessibility of the fibers, recycles acetic acid, and reduces the material consumption.

## Description

The invention relates to a method for producing cellulose diacetate with bamboo fibers as a raw material.

For producing cellulose diacetate, conventional raw materials are chemical pulps including high purity wood pulp, cotton linters pulp, and bamboo pulp, among which wood pulp is predominant. These raw materials are obtained by processes using chemicals, such as sulfate, including steps of cooking wood, cotton linters, or bamboo, removing impurities, such as lignin, hemicellulose, and colloid, then washing, bleaching, and drying. When used to produce cellulose diacetate by conventional methods, these raw materials must have a high purity, good whiteness, high degree of polymerization, and suitable chemical reactivity. To produce cellulose diacetate, a suitable chemical pulp is pre-shredded and ground, separated by wind, swollen and activated, acetylated under high or low temperature, hydrolyzed, precipitated, separated, washed, and dried.

Timber planting has a long production period and a high requirement on forestry, and occupies more land resources, which means the material supply is limited. To meet the material supply for producing paper, viscose, and cellulose acetate, bamboo, which grows fast and is abundant in nature, has aroused more and more attention. Chinese Patent Application No. CN200510122933.9 discloses a method for producing cellulose acetate with bamboo pulp. In the invention, because the reactive properties of bamboo pulp are better than those of wood pulp, the increase rate of temperature is preferably controlled at between 0.6 and 0.9°C/min, and the acetylation time is preferably between 20 and 40 min.

Currently, more and more attention is paid to physical methods for producing bamboo fibers. One such physical method includes dipping and dissolving bamboo in a plant extract, where lignin, hemicellulose, and colloid are removed, and then washed, bleached, and dried to yield the bamboo fiber. The bamboo fiber produced by the physical methods has many advantages, for example, high value added bamboo sugar and bamboo honey can be utilized, chemical consumption and pollution as well as organic waste are decreased, and the obtained fibers are less degraded. Although the resultant bamboo fibers have a high purity, it is too long to produce cellulose acetate by existing methods and equipment. Thus, the physical methods cannot improve the use value of and make full use of the bamboo, and cannot expand the material supply for producing cellulose acetate.

Studies show that ultrasonic sound, as a physical energy, can cleave hydrogen bonds, destroy the crystalline regions of cellulose, alter the morphologyand ultrastructure, reduce the crystallinity and regularity, and increase the accessibility of cellulose to reactive agents. In 2005, Tang Aimin published a research paper: *influence of ultrasonic treatment on the morphology of cellulose fibers.* The paper shows the morphology and ultrastructure of cellulose fibers vary significantly under ultrasonic treatment, and the fibrillation is particularly obvious. The variation degree is related to the treatment time and ultrasonic power. The longer the ultrasonic treatment time, the more micro fiber of secondary wall S2 layer exposed, and fibrillation happens. With the increase of ultrasonic power, the ultrasonic intensity increases and the impact of micro-jet generated by collapse of cavitation bubbles on cellulose fibers is enhanced. Accordingly, the influence on the morphology and ultrastructure of cellulose fibers is enhanced. The exposure of high reactivity of S2 layer benefits the improvement of accessibility and chemical reactivity of cellulose. In 2008, Peng Huafeng disclosed in *structural change and solubility in NMMO of cellulose after ultrasonic treatment* that the crystal structure of cellulose changes a lot after ultrasonic treatment. The pre-treated cellulose is dissolved with a 4-methylmorpholine-N-oxide aqueous solution (NMMO-H₂O). The dissolution process and results show that ultrasonic pretreatment can accelerate the dissolution rate and reduce the decomposition of cellulose.

In view of the above-described problems, it is one objective of the invention to provide a method for producing cellulose diacetate using bamboo fibers as a raw material.

To achieve the above objective, in accordance with one embodiment of the invention, there is provided a method for producing cellulose diacetate with bamboo fibers as a raw material, the method comprising the steps of:

a) soaking a tabular or flocculent bamboo fiber in a mixture comprising acetic acid, sulfuric acid, and water for dissolution, and stirring for between 2 and 20 min to yield a pulp comprising between 2 and 30 wt.% of the bamboo fiber;

b) treating the pulp with ultrasonic sound for between 10 and 50 min, with an ultrasonic frequency of between 20 and 48 KHz and an ultrasonic power of between 200 and 1500 W;

c) filtering, extruding, and dehydrating the pulp to discharge the mixture so that the bamboo fiber is between 40 and 55 wt.%, the discharged mixture being recycled for the step a);

d) adding a mixed anhydride solution comprising acetic anhydride, acetic acid, and sulfuric acid to the pulp to yield a cellulose triacetate pulp, the addition amount of the mixed anhydride solution being between 2 and 5 times that of the dried bamboo fiber; and

e) hydrolyzing, precipitating, screening, extruding, washing, rolling, and drying the cellulose triacetate pulp to yield cellulose diacetate.

In a class of this embodiment, the bamboo fiber is between 4 and 20 mm in length, has a whiteness of between 65 and 90% and a moisture of between 3 and 30%.

In a class of this embodiment, the bamboo fiber is between 5 and 12 mm in length, has a whiteness of between 75 and 90% and a moisture of between 5 and 15%.

In a class of this embodiment, the mixture comprises between 90 and 96 wt.% of acetic acid, between 1 and 7 wt.% of sulfuric acid, and between 0.5 and 3 wt.% of water.

In a class of this embodiment, the ultrasonic time is between 20 and 35 min and the ultrasonic frequency is between 22 and 32 KHz.

In a class of this embodiment, the temperature of the mixed anhydride solution is between -20 and 20°C; the mixed anhydride solution comprises between 5 and 30 wt.% of acetic acid, between 1 and 10 wt.% of sulfuric acid, and between 60 and 90 wt.% of acetic anhydride.

The cellulose diacetate prepared by the bamboo fiber has a number average degree of polymerization of between 300 and 700 and has an acetyl value of between 48 and 58%. It can be used for preparation of polymer materials, for example, cellulose diacetate cigarette tows, cellulose acetate textile filaments, thin films, semi-permeable membrane, and sensitive films. The acetyl value represents a substitution degree of glucose hydroxyl of cellulose acetate with acetyl. There are totally three hydroxyls at 2-, 3-, and 6-position of a cellulose glucose unit. When the three hydroxyls are completely substituted with acetyl, the acetyl value is 62.5%. When parts of the three hydroxyls are substituted with acetyl, the acetyl value is less than 62.5%. The acetyl value is calculated based on BS2880: 1991, Methods of testing cellulose acetate flake, Method 3. Determination of acetic acid yield. Herein acetic acid yield is preferred for describing what has previously been known as acetyl value. The acetyl value is obtained by determining the consumption of sodium hydroxide in a pulp consisting of cellulose acetate and acetone.

Acetyl value (%) = 3.002 (A-B)/W

W represents dry weight (g) of cellulose acetate; A represents a volume consumption (mL) of 0.5 mol/L NaOH in a pulp to be tested; and B represents a volume consumption (mL) of 0.5 mol/L NaOH in an acetone solution.

In the invention, the bamboo fiber used has the following properties.

As shown in Table 1,

**Table 1 Properties comparison of bamboo fiber with bamboo pulp**

| Items | Viscosity (dl/g) | Fiber length (mm) | Crystallinity (%) |
|---|---|---|---|
| Bamboo fiber | 6.51 | 6.8 | 70.0 |
| Bamboo pulp | 6.05 | 2.1 | 65.9 |

The viscosity of the bamboo fiber is slightly higher than that of the bamboo pulp, and the fiber length thereof is more than twice that of the bamboo pulp. Without degradation, original bamboo fibers are very long and not sufficiently cut during a pulp process, and tangle into a large amount of small "pulp balls" in the process of storage, transportation, refining, and formation. After drying, the "pulp balls" are turned into little and hard agglomerates.

If the bamboo fiber is dipped for dissolution, the fiber structure is not destroyed as seriously as that by chemical degradation methods. The primary wall and the secondary wall S1 layers are only slightly damaged. The crystallinity of the fibers is high.

Conventional methods for producing cellulose acetate include pre-grinding cellulose. If the cellulose contains the agglomerates as mentioned above, pre-grinding makes them more compact. Thus, the penetration of catalysts, reactants, and solvents during acetylation becomes more difficult, and the agglomerates cannot be completely acetylated. The primary wall of bamboo fibers cannot be destroyed completely and the crystallinity thereof is high, both of which reduce the reactivity. In the process of acetylation under identical conditions, compared with a bamboo pulp, the bamboo fiber is slow in reaction speed, and the resultant pulp has un-reacted white pulp specks, as shown in Table 2.

**Table 2 Comparison of acetylation between bamboo pulp and bamboo fiber**

| Items | Temperature rise rate of acetylation (°C /min) | Reaction time (min) | Pulp appearance |
|---|---|---|---|
| Bamboo fiber | 0.55 | 65 | Dark yellow, with white pulp specks |
| Bamboo pulp | 0.9 | 36 | Dark yellow, transparent, uniform color |

The acetylation process is that: the samples to be tested are ground and 40 wt.% of acetic acid (based on the dry weight of the samples) is added and stirred for 30 min; the solution is transferred to a reactor with a cooling jacket and a stirrer, stirred; a refrigerant fluid (-30°C) is added to the cooling jacket; a mixture (-15°C) comprising15 wt.% of sulfuric acid, 400 wt.% of acetic acid, and 300 wt.% of acetic anhydride (based on the dry weight of samples) is added; when the temperature in the reactor reaches 10°C, the reaction time is recorded until the pulp temperature reaches the highest. Based on the recorded results, the reaction rate is calculated.

The acetylation of the cellulose fiber happens between a solid phase and a liquid phase. If the cellulose fiber has a high accessibility, reactants, solvents, and catalysts can quickly penetrate and spread to the cellulose fiber, which benefits the acetylation. Using conventional methods, the primary wall of bamboo fibers is not destroyed completely, the crystallinity thereof is high, the accessibility thereof is bad, all of which reduce the acetylation.

In the invention, the tabular or flocculent bamboo fibers are added to an acid solution for dissolution, under the actions of centrifugal extrusion, liquid friction, and hydraulic impact, agglomerates are swollen and dissolved to yield a pulp. The pulp is treated with ultrasonic sound so that the primary wall and the secondary wall S1 layers are broken, which accelerates the fibrillation, reduces the crystallinity, and improves the accessibility of the fibers.

After treatment with ultrasonic sound, the reactivity of bamboo fibers has been improved greatly, and so has the acetylation rate. The treatment process is that: the samples to be tested is divided into two parts, one part is treated following the steps of Example 1, the other part is treated following the steps of Example 1 excluding the step of treatment with ultrasonic sound. The results are shown in Table 3.

**Table 3 Comparison of acetylation of bamboo fiber before and after treatment with ultrasonic sound**

| Items | Temperature rise rate of acetylation (°C /min) | Reaction time (min) | Pulp appearance |
|---|---|---|---|
| Before treatment | 0.75 | 43 | Dark yellow, with white pulp specks |
| After treatment | 1.28 | 26 | Dark yellow, transparent, uniform color |

Advantages of the invention are summarized below:

1. The tabular or flocculent bamboo fibers are dipped in the acid solution for dissolution instead of being pre-ground, which, on the one hand, reduces the material loss and pollution resultant from wind separation of pre-ground products, on the other hand, completely swells and dissolves the bamboo fibers;

2. The pulp is treated with ultrasonic sound so that the primary wall and the secondary wall S1 layers are broken, which accelerates the fibrillation, reduces the crystallinity, and improves the accessibility of the fibers; and

3. The acetic acid solution can be recycled by the steps of extrusion and de-acidification, which reduces the material consumption.

For further illustrating the invention, experiments detailing a method for producing cellulose diacetate with bamboo fibers as a raw material are described below. It should be noted that the following examples are intended to describe and not to limit the invention.

### Example 1

In the example, the bamboo fibers used are flocculent with small agglomerates, 7.5 mm in length, has a whiteness of 87% and a moisture of 9%.

The method for producing cellulose diacetate with the bamboo fibers as a raw material comprises the steps of:

a) to a GA92-IID ultrasonic cell smasher (900 W, 22 KHz, Wuxi Shangjia Biotechnology Co., Ltd.), adding 50g of flocculent solids of the bamboo fibers with a moisture of 9% and a mixture comprising 97 wt.% of acetic acid, 2 wt.% of sulfuric acid, and 1 wt.% of water, and stirring at 1,000 rpm for 10 min to yield a pulp comprising 8 wt.% of the bamboo fibers (based on the dry weight of samples);

b) treating the pulp with ultrasonic sound for 30 min, with an ultrasonic frequency of 25 KHz and an ultrasonic power of 400 W;

c) pouring the pulp on a polypropylene filter screen (200 meshes), extruding the filter screen, dehydrating the residue and the filtrate so that the bamboo fiber is between 40 and 55 wt.% (for example, 40%, 50%, or 55%), and collecting the acetic acid solution for recycling;

d) transferring the dehydrated pulp to a reactor with a cooling jacket and a stirrer, flowing a refrigerant fluid in the jacket, adding with stirring a mixed anhydride solution (-20°C) comprising acetic anhydride, acetic acid, and sulfuric acid for acetylation, when the temperature of the dope in the reactor reaching a range of 42°C to 49°C, and then decreasing obviously, adding a moderate magnesium acetate aqueous solution in the reactor to terminate the reaction (the magnesium acetate and water in the solution neutralizing the sulfuric acid and the acetic anhydride), and collecting a cellulose triacetate pulp; the addition amount of the acetic anhydride being thrice that of the bamboo fibers, the acetic acid, 0.5 times, and sulfuric acid, 2 wt.%; the initial temperature being -12°C, the highest temperature being 46°C, and the reaction time being 26 min; and

e) hydrolyzing, precipitating, screening, extruding, washing, rolling, and drying the cellulose triacetate pulp to yield cellulose diacetate.

Tests show that the obtained cellulose diacetate has an acetyl value of 55.6%, has a good solubility in an acetone solution, (cellulose diacetate can be dissolved in an acetone solution if it has an acetyl value from 52% to 60%), and can be used for preparation of cellulose diacetate tows.

### Example 2

In the example, the bamboo fibers used are flocculent with small agglomerates, 6.5 mm in length, has a whiteness of 88% and a moisture of 13%.

The method for producing cellulose diacetate with the bamboo fibers as a raw material comprises the steps of:

a) to a GA92-IID ultrasonic cell smasher, adding flocculent solids of the bamboo fibers and a mixture comprising 94 wt.% of acetic acid, 1 wt.% of sulfuric acid, and 5 wt.% of water, and stirring at 1,000 rpm for 10 min to yield a pulp comprising 8 wt.% of the bamboo fiber;

b) treating the pulp with ultrasonic sound for 30 min, with a frequency of 38 KHz and a power of 600 W;

c) pouring the pulp on a polypropylene filter screen (200 meshes), extruding the filter screen, dehydrating the residue and the filtrate so that the bamboo fiber is between 40 and 55 wt.% (for example, 40%, 50%, or 55%), and collecting the acetic acid solution for recycling;

d) transferring the dehydrated pulp to a reactor with a cooling jacket and a stirrer, adding a refrigerant fluid, adding with stirring a mixed anhydride solution (-10°C) comprising acetic anhydride, acetic acid, and sulfuric acid for acetylation, when the temperature in the reactor reaching the highest and then decreasing obviously, adding a moderate magnesium acetate aqueous solution to terminate the reaction, and collecting a cellulose triacetate pulp; the addition amount of the acetic anhydride being thrice that of the bamboo fibers, the acetic acid, 2 times, and sulfuric acid, 3 wt.%; the initial temperature being -8°C, the highest temperature being 49°C, and the reaction time being 28 min; and

e) hydrolyzing, precipitating, screening, extruding, washing, rolling, and drying the cellulose triacetate pulp to yield cellulose diacetate.

Tests show that the obtained cellulose diacetate has an acetyl value of 55.4%, has a good solubility in an acetone solution, and can be used for preparation of cellulose diacetate tows.

### Example 3

In the example, the production process is the same as those in Example 1 except that the bamboo fibers used are tabular solids.

## Claims

1. A method for producing cellulose diacetate comprising the steps of:
a) soaking a tabular or flocculent bamboo fiber in a mixture comprising acetic acid, sulfuric acid, and water for soaking and dispersion, and stirring for between 2 and 20 min to yield a pulp comprising between 2 and 30 wt.% of said bamboo fiber;
b) treating said pulp with ultrasonic sound for between 10 and 50 min, with an ultrasonic frequency of between 20 and 48 KHz and an ultrasonic power of between 200 and 1500 W;
c) filtering, extruding, and dehydrating said pulp to discharge said mixture so that said bamboo fiber is between 40 and 55 wt.%, the discharged mixture being recycled for the step a);
d) adding a mixed anhydride solution comprising acetic anhydride, acetic acid, and sulfuric acid to said pulp to yield a cellulose triacetate pulp, an addition amount of said mixed anhydride solution being between 2 and 5 times that of the dried bamboo fiber; and
e) hydrolyzing, precipitating, screening, extruding, washing, rolling, and drying said cellulose triacetate pulp to yield cellulose diacetate.

2. The method of claim 1, **characterized in that** said bamboo fiber is between 4 and 20 mm in length, has a whiteness of between 65 and 90% and a moisture content of between 3 and 30%.

3. The method of claim 2, **characterized in that** said bamboo fiber is between 5 and 12 mm in length, has a whiteness of between 75 and 90% and a moisture content of between 5 and 15%.

4. The method of claim 3, **characterized in that** said mixture comprises between 90 and 96 wt.% of acetic acid, between 1 and 7 wt.% of sulfuric acid, and between 0.5 and 3 wt.% of water.

5. The method of claim 3, **characterized in that** said ultrasonic time is between 20 and 35 min and said ultrasonic frequency is between 22 and 32 KHz.

6. The method of claim 3, **characterized in that** a temperature of said mixed anhydride solution is between -20 and 20°C; said mixed anhydride solution comprises between 5 and 30 wt.% of acetic acid, between 1 and 10 wt.% of sulfuric acid, and between 60 and 90 wt.% of acetic anhydride.

7. The method of claim 1, **characterized in that** said mixture comprises between 90 and 96 wt.% of acetic acid, between 1 and 7 wt.% of sulfuric acid, and between 0.5 and 3 wt.% of water.

8. The method of claim 1, **characterized in that** said ultrasonic time is between 20 and 35 min and said ultrasonic frequency is between 22 and 32 KHz.

9. The method of claim 1, **characterized in that** a temperature of said mixed anhydride solution is between -20 and 20°C; said mixed anhydride solution comprises between 5 and 30 wt.% of acetic acid, between 1 and 10 wt.% of sulfuric acid, and between 60 and 90 wt.% of acetic anhydride.

10. The method of claim 1, **characterized in that** said cellulose diacetate has a number average degree of polymerization of between 300 and 700 and has an acetyl value of between 48 and 58%.
